# EUROPÄISCHE PATENTANMELDUNG

(11) **EP 1 897 625 A1**
(43) Veröffentlichungstag der Anmeldung: **12.03.2008**
(21) Anmeldenummer: 06120284.2
(22) Anmeldetag: 07.09.2006
(51) Int. Cl.: B05C 5/02

(54) **Vorrichtung zur Abgabe von viskosem oder pastösem Material**

(71) Anmelder: Sika Technology AG, 6340 Baar (CH)
(72) Erfinder: Koch, Reto, 5433 Remetschwil (CH); Corsaro, Antonio, 8046 Zürich (CH)
(74) Vertreter: Sika Patent Attorneys

(57) **Zusammenfassung**

Die Vorrichtung (100), die der Abgabe von viskosem oder pastösem Material (2) in Form eines Materialstrangs (22) dient, weist eine Austrittsdüse (1), mit einem Düsenkörper (15) auf, an dem frontseitig wenigstens eine auf ein Substrat (3) abstützbare Kontaktfläche (155) vorgesehen ist, die eine Austrittsöffnung (131) teilweise begrenzt, welche an eine am Düsenkörper (15) seitlich angeordnete Extrusionsöffnung (132) anschliesst, durch die der Materialstrang (22) mit einem gewünschten Querschnitt aus der Düse (1) austreten kann. Erfindungsgemäss weist der der Düsenkörper (15) zusätzlich eine gegebenenfalls maschinell abschliessbare Eintrittsöffnung (133) auf, welche an die Austrittsöffnung (131) anschliesst und der Extrusionsöffnung (132) gegenüber liegt.

## Beschreibung

### Technisches Gebiet

Die Erfindung geht aus von einer Vorrichtung zur Abgabe von viskosem oder pastösem Material, wie Dichtungsmaterial oder Klebstoff, in Form eines Profilstrangs nach dem Oberbegriff des ersten Anspruches.

### Stand der Technik

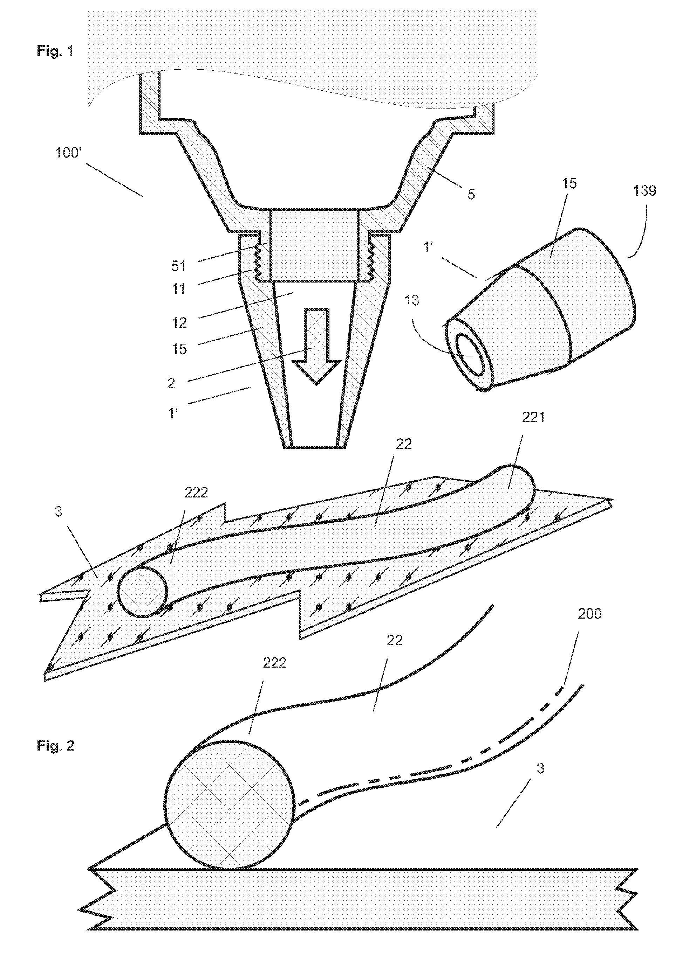

Gattungsgemässe Vorrichtungen, die beispielsweise aus [1], US 4'933'032 und [2], US 6'607'622 bekannt sind, dienen der Abgabe von viskosem oder pastösem Material in Form eines Profilstrangs, beispielsweise auf einer Autoglasscheibe, die mit einem Fensterrahmen einer Fahrzeugkarosserie verklebt werden soll. Das abzugebende Material ist in einem Behälter gelagert und wird der gegebenenfalls mittels eines Roboters geführten Vorrichtung über wenigstens einen elastischen Schlauch zugeführt. Der mit dem abzugebenden Material gefüllte Behälter kann ferner auch direkt bei der Vorrichtung angeordnet und beispielsweise mit dieser verschraubt sein. Vorrichtungen dieser Art weisen einen manuell, elektrisch, hydraulisch oder pneumatisch betätigten Antrieb auf.
Die aus [1] und [2] bekannten Vorrichtungen erlauben es, einen Materialstrang mit einem bestimmten Profil an ein Substrat abzugeben. Das zugeführte Material wird dabei unter hohem Druck durch eine Düse ausgepresst, welche entsprechend dem erforderlichen Profil gewählt ist. Bei der aus [2] bekannten Vorrichtung wird der abgegebene Materialstrang nachbearbeitet, was mit zusätzlichen Massnahmen verbunden ist, die einen unerwünschten Aufwand verursachen.
Bei der nachstehend in Figur 1 gezeigten Vorrichtung 100' weist der durch eine mit Düse 1' an ein Substrat 3 abgegebene Materialstrang 22 einen kreisförmigen Querschnitt auf und liegt daher zumindest annähernd entlang einer Linie 200 (siehe Figur 2) auf dem Substrat 3 auf. Die erforderliche Verbindung mit und Haftung auf dem Substrat 3 erfolgt daher erst nach der Bearbeitung des Materialstrangs 22 oder bei der Verbindung des Substrats 3 mit einem weiteren Gegenstand, wodurch der Materialstrang 22 deformiert und an die beiden zu verbindenden Teile flächig angedrückt wird. Dieser Vorgang hinterlässt einen verpressten Materialstrang, der normalerweise einen nicht regelmässigen Verlauf des Querschnitts und gegebenenfalls Lufteinschlüsse aufweist, in deren Bereich eine mangelhafte Verbindung und eine nicht tolerierbare Undichtigkeit resultieren können.
In der Praxis werden daher Düsen verwendet, bei denen der Materialstrang bereits mit einem Profil an das Substrat abgegeben wird, welches mit einer Profilseite flächig am Substrat anliegt. Bei diesen bekannten Lösungen wird der Materialstrang an einer Extrusionsöffnung abgegeben, die seitlich an der Düse vorgesehen ist, die während der Materialabgabe vertikal ausgerichtet über das Substrat gefahren wird. Bei der Verbindung des Substrats, beispielsweise eine Autoscheibe, mit einem weiteren Gegenstand, beispielsweise einem Karrosserieflansch, wird der abgelegte Materialstrang fest an das Substrat und an den Flansch angepresst, so dass diese durch das Material flächig benetzt und miteinander verbunden werden. Nachteilig bei diesen Lösungen ist, dass die zuverlässige Benetzung des Substrats eben erst mit der Montage, d.h. bei Andrücken des weiteren Gegenstands geschieht. Beim Ablegen des Materials können daher Lufteinschlüsse resultieren, welche nach der Montage des Substrats punktuell Probleme, beispielsweise mangelnde Haftung oder Undichtigkeiten verursachen können.
Ferner resultieren bei den bekannten Vorrichtungen Probleme, sofern der Materialstrang in Form einer Schlaufe auf das Substrat aufgetragen werden soll. Beispielsweise für die Montage einer Autoglasscheibe ist der Materialstrang in einer in sich geschlossenen Schlaufe an das Substrat abzugeben. Mit den bekannten Vorrichtungen resultieren bei der Verbindung des Anfangs- und des Endstücks dabei Probleme, da ein Überfahren des Anfangsstücks zum Schliessen der Schlaufe, Material desselben erfasst und gegebenenfalls verschmiert. Um dies zu vermeiden, wird die Düse beim Schliessen der Schlaufe hingegen angehoben und das Anfangsstück in einer gewünschten Höhe überfahren werden. Dies erfordert bei der manuellen Führung der Vorrichtung hingegen eine erhöhte Geschicklichkeit oder bei der maschinellen Führung ein speziell ausgestaltetes Steuerprogramm. Zudem entsteht bei diesem Vorgehen ein Überlappen von Anfangs- und Endstück und somit ein grössere Materialanhäufung, die oft nicht erwünscht ist, weil das zusätzlich aufgetragene Material beim Schliessen der Verbindung im Bereich der Verbindungsstelle seitlich in Zonen verdrängt wird, in denen das Material störend in Erscheinung treten kann. Ferner entstehen beim Überlappen des Anfangs- und Endstücks wiederum Lufteinschlüsse, beziehungsweise Undichtigkeiten.
Bei der Verwendung einer Düse, wie sie in Figur 1 dargestellt ist, können zudem bereits nach kurzer Betriebsdauer, bzw. wenigen Anwendungszyklen, grössere Verschmutzungen resultieren, die einen erhöhten Wartungsaufwand verursachen.

### Darstellung der Erfindung

Der Erfindung liegt die Aufgabe zugrunde, eine verbesserte Vorrichtung der eingangs genannten Art zu schaffen.

Insbesondere ist eine Vorrichtung zu schaffen, mittels der viskoses oder pastöses Material, wie Dichtungsmaterial und Klebstoff, in Form eines Strangs mit einem regelmässigen Profil in einer geschlossenen Schlaufe und unter Vermeidung von Lufteinschlüssen an ein Substrat abgegeben werden kann.

Die Vorrichtung soll zudem mit einem reduzierten Wartungsaufwand betrieben werden können. Insbesondere sind störende Verschmutzungen der Düse nach wenigen Arbeitszyklen zu vermeiden.

Erfindungsgemäss wird dies durch die Merkmale des ersten Anspruches erreicht. Weitere vorteilhafte Ausgestaltungen der Erfindung ergeben sich aus den Unteransprüchen.

Die Vorrichtung, die der Abgabe von viskosem oder pastösem Material in Form eines Materialstrangs dient, weist eine Austrittsdüse, mit einem Düsenkörper auf, an dem frontseitig wenigstens eine auf ein Substrat abstützbare Kontaktfläche vorgesehen ist, die eine Austrittsöffnung teilweise begrenzt, welche an eine am Düsenkörper seitlich angeordnete Extrusionsöffnung anschliesst, durch die der Materialstrang mit einem gewünschten Querschnitt aus der Düse austreten kann. Ferner weist der Düsenkörper zusätzlich eine Eintrittsöffnung auf, welche an die Austrittsöffnung anschliesst und der Extrusionsöffnung gegenüber liegt.

Die Düse, der abzugebendes Material gegebenenfalls über einen Schlauch aus einem Behälter zugeführt wird, kann daher manuell oder maschinell auf das Substrat abgestützt und anschliessend entlang diesem verschoben werden. Dadurch wird das Material gegen das Substrat gepresst und durch die Extrusionsöffnung geführt, die an der Unterseite durch das Substrat begrenzt ist. Dadurch ist gewährleistet, dass das Material ohne Lufteinschluss flächig auf das Substrat aufgetragen wird und beim Austritt aus der Extrusionsöffnung ein regelmässiges Profil erhält. Bei der Fertigung einer Schlaufe wird das Material daher einwandfrei auf das Substrat aufgetragen. Zum Schliessen der Schlaufe wird die Düse nun derart gegen das zu Beginn aufgetragene Endstück des Materialstrangs geführt, dass dieses durch die Eintrittsöffnung in der Düse eintreten, sich mit dem Material innerhalb der Düse verbinden und durch die Extrusionsöffnung wieder aus der Düse austreten kann. Dadurch wird die Schlaufe nahtlos abgeschlossen und das Profil im Bereich der Verbindungsstelle dem regelmässigen Profil des Materialstrangs im weiteren Verlauf der Schlaufe angepasst.

Vorteilhaft bei der Verwendung der zusätzlichen Eintrittsöffnung ist ferner, dass die Verschmutzung der Düse durch austretendes Material deutlich reduziert wird.

Der Körper der Düse, der mit einem der Durchführung des Materials dienenden Kanal versehene ist, ist beispielsweise zylindrisch, pyramidal oder kegelförmig ausgestaltet. Vorzugsweise wird die Eintrittsöffnung zumindest annähernd gleich ausgestaltet oder mit gleichen Proportionen versehen wie die Extrusionsöffnung, die beispielsweise einen dreieckigen oder trapezoiden Querschnitt aufweist. Die Eintrittsöffnung kann etwas grösser sein, damit das Endstück der Schlaufe in die Düse eingeführt werden kann, ohne dass Material durch an den Rändern der Öffnung abgetragen wird.

Die Düse wird manuell oder mittels einer programmgesteuerten Antriebsvorrichtung maschinell gehalten und geführt, um einen Materialstrang gegebenenfalls in Form einer in sich geschlossenen Schlaufe auf ein Substrat aufzutragen. Bei der maschinellen Führung der Düse mittels eines Roboters kann die Schlaufe besonders präzise gebildet werden, wobei das Anheben der Düse beim Schliessen der Schlaufe und ein entsprechender Steuerungsaufwand entfallen können.

In einer besonders vorteilhaften Ausgestaltung ist die Eintrittsöffnung mittels eines verschiebbar oder drehbar gelagerten Abschlusselements wahlweise ganz oder teilweise abschliessbar. Durch das Öffnen der Eintrittsöffnung gelingt wiederum das problemlose Schliessen einer Schlaufe eines Materialstrangs. Ferner reduziert sich die Verschmutzung der Düse. Durch das Schliessen der Eintrittsöffnung wird das Material stärker gegen das Substrat gedrückt, wodurch dieses noch zuverlässiger benetzt wird und Lufteinschlüsse noch zuverlässiger vermieden werden. Um beide Vorteile gleichzeitig zu erzielen, kann die Eintrittsöffnung auch nur teilweise geschlossen, bzw. deren Profil, verändert oder proportional reduziert werden.

Sofern ein drehbar gelagertes Abschlusselement verwendet wird, weist dieses vorzugsweise Öffnungen auf, die wahlweise über die Extrusionsöffnung und die Eintrittsöffnung oder nur über die Extrusionsöffnung drehbar sind. Durch entsprechendes Drehen des Abschlusselements können daher wahlweise die Extrusionsöffnung und die Eintrittsöffnung oder nur die Extrusionsöffnung geöffnet werden. Die Öffnungen sind dabei vorzugsweise derart gewählt, dass die Extrusionsöffnung während des Drehens des Abschlusselements stets geöffnet bleibt, um die Abgabe des Materialstrangs nicht zu unterbrechen. Ebenso kann die Eintrittsöffnung nur teilweise geöffnet werden.

In einer weiteren vorzugsweisen Ausgestaltung sind der Körper der Düse und das Abschlusselement mittels wenigstens eines Lagerelements oder durch entsprechende Formgebung des Körpers der Düse und des Abschlusselements gegenseitig derart gelagert, dass der Körper der Düse durch das Abschlusselement oder das Abschlusselement durch den Körper der Düse drehbar oder verschiebbar gehalten ist. Besonders einfach gelingt dies, indem der Körper der Düse und das Abschlusselement rotatorische oder translatorische Lagerelemente aufweisen, welche Bestandteile des Körpers der Düse und des Abschlusselements bilden. Beispielsweise sind der Körper der Düse und das Abschlusselement hohlzylindrisch ausgestaltet und praktisch spielfrei ineinander verschiebbar und drehbar. Der Drehwinkel oder die Verschiebungsdistanz kann dabei durch Flansche oder einsetzbare Arretierelemente begrenzt werden. Auf diese Weise resultiert eine sowohl manuell als auch maschinell vorteilhaft führbare und betätigbare Vorrichtung.

Besonders vorteilhaft ist die Verwendung eines elastischen Elements, beispielsweise einer Spiralfeder, mittels dessen der Körper der Düse und das Abschlusselement, derart miteinander verbunden sind, dass das Abschlusselement mittels Krafteinwirkung relativ zur Eintrittsöffnung verschiebbar ist, wodurch die Eintrittsöffnung teilweise oder vollständig geöffnet oder verschlossen werden kann. Beispielsweise werden der Körper der Düse und das Abschlusselement mittels des elastischen Elements auseinander gegen einen Anschlag und somit in eine Position gedrückt, in der die Extrusionsöffnung und die Eintrittsöffnung geöffnet sind. Die Antriebsvorrichtung, welche beispielsweise das mit dem Düsenkörper verbundene Abschlusselement hält und führt, kann dieses bei der Abgabe von Material derart gegen das Substrat drücken, dass die Eintrittsöffnung geschlossen bleibt. Erst beim Schliessen der Schlaufe eines abgegebenen Materialstangs kann die Antriebsvorrichtung das Abschlusselement soweit anheben, dass der Ventilkörper noch immer gegen das Substrat gedrückt, die Eintrittsöffnung hingegen geöffnet wird. Auf diese Weise werden keine zusätzlichen mechanischen Steuerelemente benötigt, welche von der Antriebsvorrichtung zu betätigen wären.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen. Es sind nur die für das unmittelbare Verständnis der Erfindung wesentlichen Elemente gezeigt. Die Strömungsrichtung der Medien und die Bewegungsrichtung von Vorrichtungsteilen sind mit Pfeilen angegeben.

Es zeigen:
- Fig. 1: eine bekannte Vorrichtung 100' mit einer Düse 1', durch die viskoses oder pastöses Material 2 durch eine Austrittsöffnung 13' in Form eines Materialstrangs 22 mit rundem Querschnitt an ein Substrat 3 abgegeben werden kann;
- Fig. 2: den von der Vorrichtung 100' von Figur 1 abgegebenen Materialstrang 22, der praktisch nur entlang einer Linie 200 mit dem Substrat 3 verbunden ist;
- Fig. 3: eine verbesserte Vorrichtung 100 mit einer Düse 1 A, welche eine gegen das Substrat 3 zu richtende Austrittsöffnung 131 und eine daran anschliessende Extrusionsöffnung 132 aufweist, durch die viskoses oder pastöses Material in Form eines Materialstrangs 22 mit tapezoidem Querschnitt abgegeben wird;
- Fig. 4: eine erfindungsgemässe Vorrichtung 100 mit einer Düse 1, welche eine gegen das Substrat 3 zu richtende Austrittsöffnung 131 und eine daran anschliessende Extrusionsöffnung 132 auf einer Seite und eine daran anschliessende Eintrittsöffnung 133 auf der anderen Seite aufweist, durch die viskoses oder pastöses Material, das in Form eines Materialstrangs 22 durch die Extrusionsöffnung 132 abgegeben wurde, in die Düse 1 eintreten kann, um eine Schlaufe nahtlos und unter Vermeidung von Profiländerungen zu schliessen;
- Fig. 4a, 4b: vorzugsweise Ausgestaltungen der Düse 1 von Figur 4;
- Fig.5: eine erfindungsgemässe Vorrichtung 100 mit maschineller Führung während der Abgabe eines Materialstrangs 22, der zu einer Schlaufe geschlossen wird;
- Fig. 6a, 6b: eine erfindungsgemässe Düse 1 mit einem Düsenkörper 15 und einem Abschlusselement 150, welches während des Betriebs vertikal verschiebbar ist, um die Eintrittsöffnung 133 im Düsenkörper 15 wahlweise zu schliessen oder zu öffnen;
- Fig. 7a, 7b: eine erfindungsgemässe Düse 1 mit einem Düsenkörper 15 und einem Abschlusselement 150, welches während des Betriebs drehbar ist, um die Eintrittsöffnung 133 im Düsenkörper 15 wahlweise zu schliessen oder zu öffnen; und
- Fig. 8a, 8b: eine erfindungsgemässe Vorrichtung 100 mit einer Düse 1, welche einen Düsenkörper 15 und ein Abschlusselement 150 aufweist, die mittels einer Spiralfeder 6 auseinander gedrückt und mittels einer Stange 8 einer Antriebsvorrichtung entlang einem Substrat 3 geführt und gegeneinander gedrückt werden können, um die Eintrittsöffnung 133 bedarfsweise zu schliessen.

### Weg zur Ausführung der Erfindung

Figur 1 zeigt eine eingangs beschriebene bekannte Vorrichtung 100' mit einer Düse 1', durch die viskoses oder pastöses Material 2 durch eine Austrittsöffnung 13' in Form eines Materialstrangs 22 mit rundem Querschnitt an ein Substrat 3 abgegeben werden kann. Die Düse 1 ist mittels Gewindeelementen 11, 51 mit einem Behälter 5 verschraubt, in dem das abzugebende Material 2 gelagert ist.

Figur 2 zeigt den von der Vorrichtung 100' von Figur 1 abgegebenen Materialstrang 22, der praktisch nur entlang einer Linie 200 mit dem Substrat 3 verbunden ist. Beim Betrieb der Vorrichtung 100' ist ganz besonders darauf zu achten, dass die Materialzufuhr und die Fahrgeschwindigkeit der Düse 1' aufeinander abgestimmt sind, so dass keine unzulässig hohen Zugkräfte auf den abgegebenen Materialstrang 22 ausgeübt werden, die diesen vom Substrat 3 ablösen könnten.

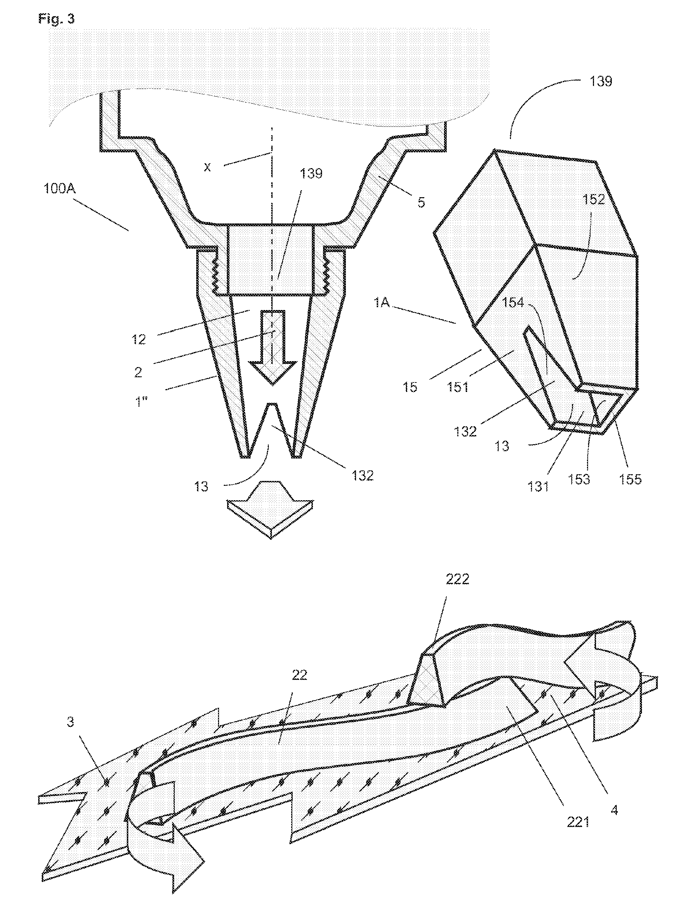

Figur 3 zeigt eine Vorrichtung 100 mit einer Düse 1 A bei der der ein Materialstrang 22 mit dreieckförmigem Querschnitt an einer mit einer entsprechenden Extrusionsöffnung 132 versehenen Seitenwand 151 der Düse 1 A an das Substrat 3 abgegeben wird. Die weiteren drei Seitenwände 152, 153 und 154, die keine Öffnung aufweisen, begrenzen an deren Ende eine Austrittsöffnung 131, durch die der Materialstrang 22 flächig an das Substrat 3 angepresst wird, bevor er durch die an der Unterseite durch das Substrat 3 begrenzte Extrusionsöffnung 132 mit gewünschtem Querschnitt aus der Düse 1A austritt. Die unteren Enden der Seitenwände 151, 152, 153 und 154 der Düse 1 A, welche die Austrittsöffnung 131 begrenzen, bilden eine Kontaktfläche 155, die während der Materialabgabe an der Oberfläche des Substrats 3 anliegt. Die Düse 1 A wird zur Abgabe des Materials 2 somit in Kontakt mit dem Substrat 3 gebracht, der während der gesamten Dauer der Materialabgabe aufrechterhalten wird. Dadurch bleibt gewährleistet, dass der Materialstrang unter Druckeinwirkung flächig in guten Kontakt mit dem Substrat 3 gerät, während die unten durch das Substrat 3 begrenzte Extrusionsöffnung 132 ihre beispielsweise dreieckige Form unverändert beibehält.

Nachteilig bei der in Figur 3 gezeigten Vorrichtung 100A ist, dass bei der Abgabe eines Materialstrangs 22 in Form einer Schlaufe noch immer das in Figur 3 illustrierte Problem resultiert. Beim Schliessen der Schlaufe muss die Düse 1 A angehoben werden, damit das Endstück 222 über das Anfangsstück 221 gefahren werden kann und dieses nicht verschmiert. Dabei entsteht eine Brücke mit einem Durchgang 4, in dem bei der Montage des Substrats 3 ein Lufteinschluss oder eine Undichtigkeit entstehen kann.

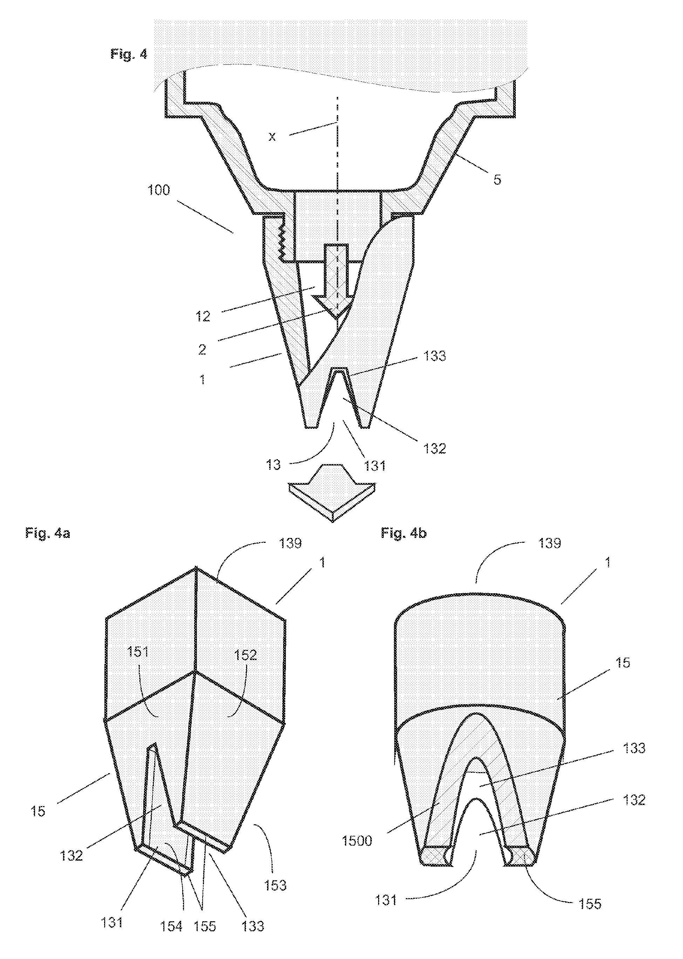

Figur 4 zeigt eine erfindungsgemässe Vorrichtung 100 mit einer Düse 1, der viskoses oder pastöses Material 2 aus einem angeschlossenen Behälter, beispielsweise einer Kartusche zuführbar ist. Die Düse 1 weist erfindungsgemäss eine Extrusionsöffnung 132 und, gegenüberliegend, eine Eintrittsöffnung 133 auf, die in eine dazwischen liegende Austrittsöffnung 131 einmünden und mit dieser das frontseitige Öffnungssystem 13 der Düse 1 bilden.

Vorzugsweise Ausgestaltungen der erfindungsgemässen Düse 1 sind in Figur 4a und 4b gezeigt.

Die Düse 1 von Figur 4a weist eine erste Seitenwand 151 mit einer Extrusionsöffnung 132, eine gegenüber liegende dritte Seitenwand mit einer Eintrittsöffnung 133 und eine zweite und eine vierte Seitenwand 152, bzw. 154, auf, die keine Öffnung enthalten. Die vier Seitenwände 151, ..., 154 verlaufen gerade nach unten und begrenzen an den Eckpunkten ihrer Enden eine rechteckige Austrittsöffnung 131, die auf einer Seite vom Endstück der zweiten Seitenwand 152 und auf der gegenüberliegenden Seite vom Endstück der vierten Seitenwand 154 durchgehend begrenzt wird. Die Austrittsöffnung 131 verbindet dabei die Extrusionsöffnung 132 und die Eintrittsöffnung 133 miteinander zu einer durchgehenden Öffnung 13 mit den genannten Segmenten 131, 132 und 133, denen unterschiedliche Funktionen zugeordnet sind.

Die Endstücke der zweiten und vierten Seitenwand 152, bzw. 154, weisen stirnseitig je eine Kontaktfläche 155 auf, die während der Abgabe des Materials 2 auf das Substrat 3 abgestützt werden, so dass die Austrittsöffnung 131, während der Materialabgabe durch das Substrat 3 abgedeckt und die Extrusionsöffnung 132 und die Eintrittsöffnung 133 durch das Substrat 3 begrenzt sind. Folglich wird das Substrat 3 an der Austrittsöffnung 131 durch das Material 2 flächig benetzt, das, während des seitlichen Verfahrens der Düse 1, anschliessend durch die Extrusionsöffnung 132 als Materialstrang 22 mit regelmässigem Profil austritt.

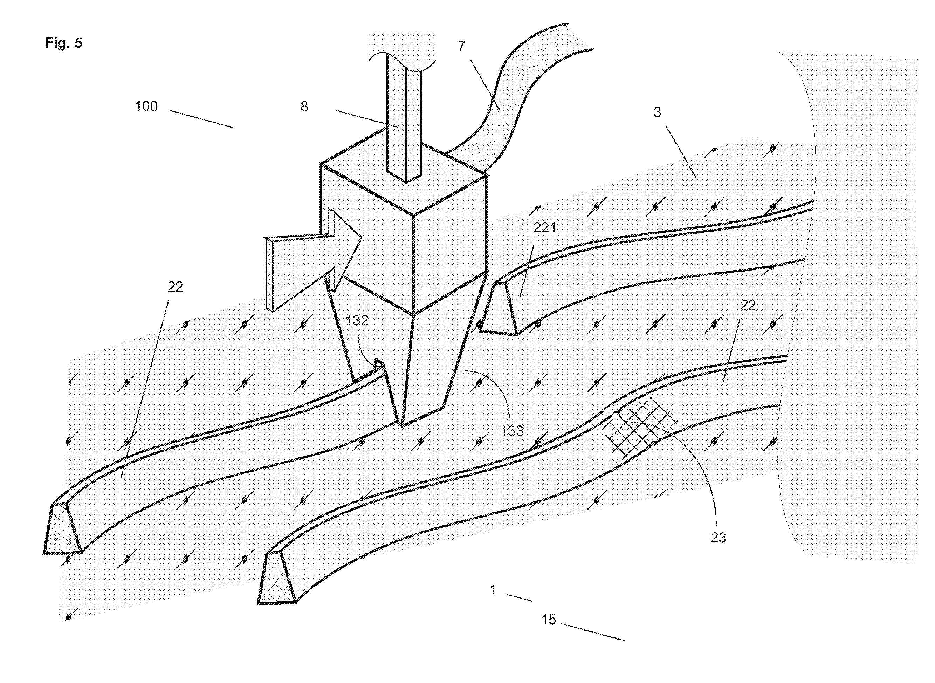

Beginnend mit einem Anfangsstück 221 wird der Materialstrang 22 auf das Substrat 3 aufgetragen. Sofern der Materialstrang 22 in Form einer Schlaufe auf das Substrat 3 aufgetragen werden soll, wird die Düse 1 derart zum Anfangsstück 221 zurückgeführt, dass dieses durch die Eintrittsöffnung 133 in der Düse 1 eintreten kann, ohne dass das Anfangsstück 221 deformiert wird. Das Anfangsstück 221 und das Endstück 222 werden dadurch nahtlos in einander überführt, so dass kein Überlappen von Anfangsstück 221 und Endstück 222, sondern ein Verbindungsstück 23 (siehe Figur 5) resultiert, welches dasselbe Profil aufweist, wie der restliche Teil der Schlaufe.

Die Düse 1 kann dabei ein kantiges Spritzgussteil sein, wie es in Figur 4a gezeigt ist. Ferner kann die Düse 1 auch maschinell oder manuell aus einem rohrförmigen, beispielsweise hohlzylindrischen, rechteckigen oder kegelförmigen Element gefertigt werden, indem dieses beidseitig mit einem Schnitt 1500 versehen wird, durch die seitlich die Extrusionsöffnung 132 und die Eintrittsöffnung 133 geschaffen werden, welche an die Austrittsöffnung 131 anschliessen, die ferner durch die Kontaktflächen 155 der angrenzenden Seitenwände begrenzt ist. Eine entsprechende Düse 1 ist in Figur 4b gezeigt.

Figur 5 zeigt eine erfindungsgemässe Vorrichtung 100 mit maschineller Führung während der Abgabe eines Materialstrangs 22. Die Düse 1, der das abzugebende Material 2 durch einen Schlauch 7 zugeführt wird, wird durch eine Stange 8, bzw. einen Roboterarm, geführt, welcher die Düse 1 auf das Substrat 3 absetzen, verfahren und beliebig drehen und wenden kann, so dass die Düse 1, wie in Figur 5 gezeigt, mit der frontseitig vorgesehenen Eintrittsöffnung 133 derart gegen das Anfangsstück 221 gefahren werden kann, dass das Anfangsstück 221 und das Endstück 222 des Materialstrangs 22 stetig ineinander übergehen.

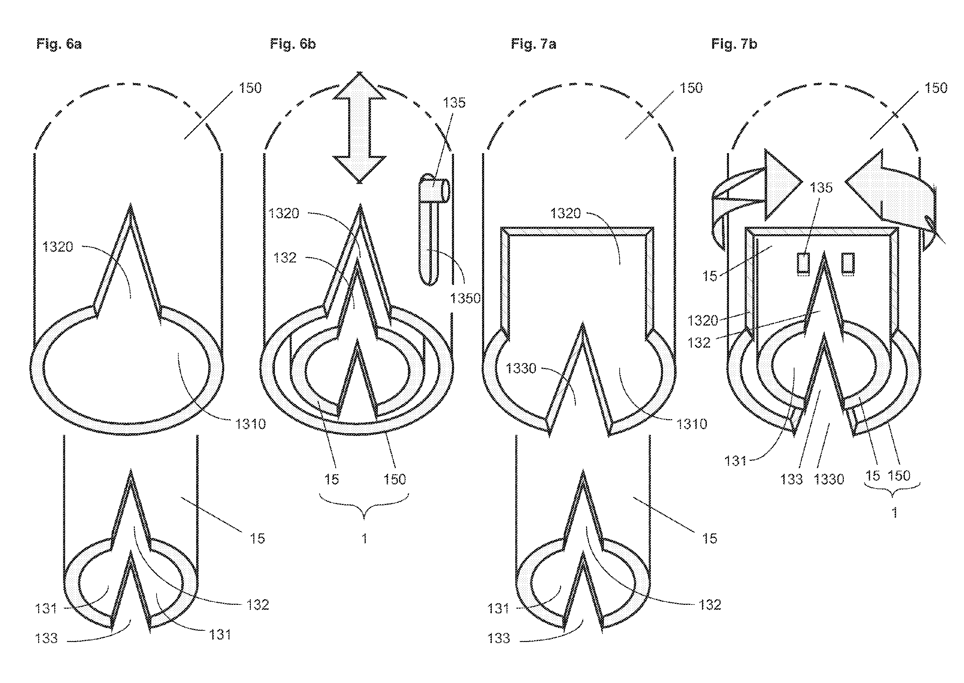

Fig. 6a zeigt das untere Ende eines hohlzylindrischen Düsenkörpers 15, der eine kreisförmige Austrittsöffnung 131 und daran anschliessend Extrusions- und Eintrittsöffnungen 132, bzw. 133, aufweist, die einander diametral gegenüber liegen. Ferner ist ein hohlzylindrisches Abschlusselement 150 gezeigt, das eine erste Öffnung 1310, nämlich die frontseitige Zylinderöffnung und daran anschliessend eine zweite Öffnung 1320 aufweist, welche zur Extrusionsöffnung 132 am Düsenkörper 15 korrespondiert. Der Aussendurchmesser des Düsenkörpers 15 und der Innendurchmesser des Abschlusselements 150 sind derart gewählt, dass der Düsenkörper 15 innerhalb des Abschlusselements 150 koaxial ausgerichtet mit nur geringem Spiel gehalten werden kann.

Sofern die unteren Enden des Abschlusselements 150 und des darin gehaltenen Düsenkörpers 15 auf gleicher Höhe liegen, wie dies in Figur 6b gezeigt ist, so ist die Eintrittsöffnung 133 durch das Abschlusselement 150 verschlossen. Die Extrusionsöffnung 132 liegt aufgrund der darüber liegenden zweiten Öffnung 1320 im Abschlusselement 150 noch immer frei. Ebenfalls frei liegt die Austrittsöffnung 131, die innerhalb der ersten Öffnung 1310 des Abschlusselements 1310 liegt.

Durch gegenseitige Verschiebung des Abschlusselements 150 und des Düsenkörpers 15, bzw. durch Anheben und wieder Absenken des Abschlusselements 150, kann die Eintrittsöffnung 133 des Düsenkörpers 15 somit wahlweise geöffnet und wieder verschlossen werden, wobei für jede der beiden Positionen die oben beschriebenen Vorteile resultieren.

Figur 7a zeigt den Düsenkörper von Figur 6a und ein hohlzylindrisches Abschlusselement 150, das eine erste Öffnung 1310, nämlich die frontseitige Zylinderöffnung, und daran anschliessend auf einer Seite eine zur Extrusionsöffnung 132 korrespondierende zweite Öffnung 1320 und auf der gegenüberliegenden Seite eine zur Eintrittsöffnung 133 korrespondierende dritte Öffnung 1330 aufweist. Der Aussendurchmesser des Düsenkörpers 15 und der Innendurchmesser des Abschlusselements 150 sind wiederum derart gewählt, dass der Düsenkörper 15 innerhalb des Abschlusselements 150 mit nur geringem Spiel gehalten werden kann.

Figur 7b zeigt das drehbar gelagerte Abschlusselement 150 mit dem darin gehaltenen Düsenkörper 15 in einer Position, in der die Öffnungen 132, 133, bzw. 1320, 1330 des Düsenkörpers 15 und des Abschlusselements 150 in einer Linie ausgerichtet sind. Die zweite Öffnung 1320 im Abschlusselement 150 ist im Verhältnis zur Extrusionsöffnung 132 so gross gewählt, so dass das Abschlusselement 150 in einem relativ weiten Winkel nach links oder rechts gedreht werden kann, ohne dass die Extrusionsöffnung 132 des Düsenkörpers 15 abgedeckt wird. Während die Extrusionsöffnung 132 bei der Drehung des Abschlusselements 150 innerhalb eines bestimmten Winkels durchgehend geöffnet bleibt, wird die Eintrittsöffnung 133 bei einer Drehung des Abschlusselements 150 nach rechts oder links jeweils verschlossen. Auf diese Weise kann die Eintrittsöffnung 133 mit einfachen Massnahmen geöffnet oder verschlossen werden.

Durch die gegenseitige Lagerung des Abschlusselements 150 und des koaxial darin gehaltenen Düsenkörpers 15 kann der Verschlussmechanismus mit einfachen Massnahmen realisiert und betätigt werden. Durch Arretier- oder Halteelemente 135, 1350 können dabei in einfacher Weise Anschläge gebildet werden, welche den Drehwinkel oder die Distanz begrenzen, um den, bzw. die, der Düsenkörper 15 und das Abschlusselement 150 gegeneinander dreh- oder verschiebbar sind.

In Figur 6b weist das Abschlusselement 150 einen Führungsschlitz 1350 auf, in dem ein in den Düsenkörper 15 eingesetzter Bolzen 135 geführt und gehalten ist. Das Abschlusselement 150 und der Düsenkörper 15 können daher nur entsprechend der Länge des Führungsschlitzes 1350 vertikal gegeneinander verschoben, jedoch nicht voneinander gelöst werden. In Figur 7b ist der Düsenkörper 15 mit zwei Nocken 135 versehen, welche die Drehung des Abschlusselements 150 begrenzen

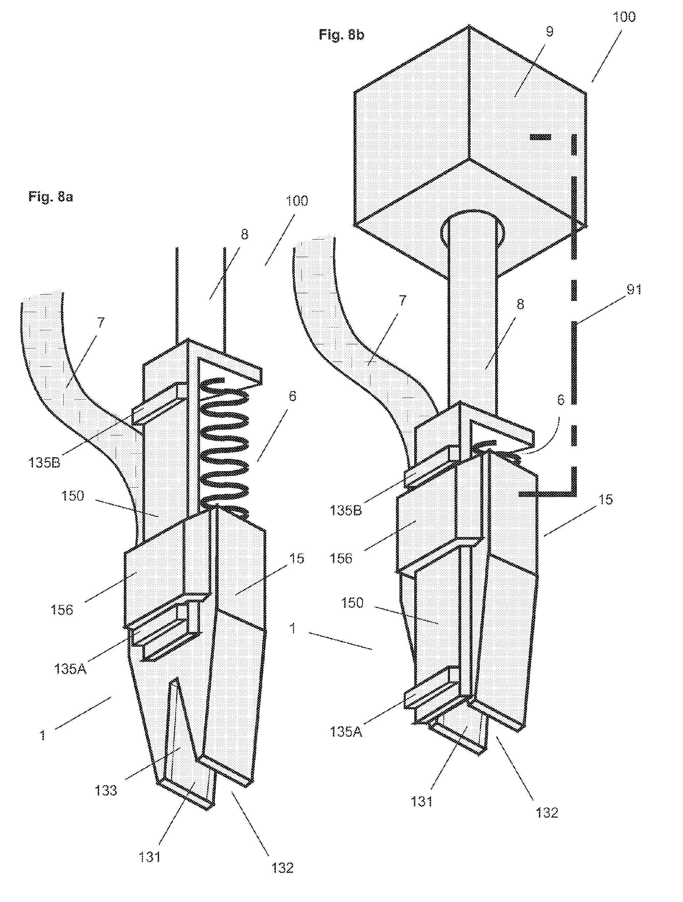

Figur 8a zeigt in schematischer Darstellung eine erfindungsgemässe Vorrichtung 100 in einer weiteren vorteilhaften Ausgestaltung. Der Vorrichtungskörper 15 der Düse 1, der ähnlich ausgestaltet ist wie derjenige von Figur 4, weist ein Lagerelement 156 auf, welches ein L-Profil-förmiges Abschlusselement 150 verschiebbar hält, das eine untere und eine obere Anschlagleiste 135A, bzw. 135B, aufweist, welche die Verschiebung des Abschlusselements 150 begrenzen und dieses innerhalb des Lagerelements 156 halten. Zwischen dem Kopfstück des Abschlusselements 150 und dem Düsenkörper 15 ist eine Spiralfeder 6 angeordnet, welche den Düsenkörper 15 und das Abschlusselement 150 auseinander drückt, bis die untere Anschlagleiste 135A am Lagerelement 156 anschlägt. Mittels einer Antriebsstange 8 der Antriebsvorrichtung 9 kann die Eintrittsöffnung 133 nun verschlossen werden, indem das Abschlusselement 150 entgegen der Kraft der Spiralfeder 6 gegen den auf das Substrat 3 abgestützten Düsenkörper 15 gedrückt wird, bis das Abschlusselement 150 ebenfalls auf das Substrat 3 auftritt, oder bis die obere Anschlagleiste 135B am Lagerelement 156 anschlägt. Die Antriebsvorrichtung 9 kann daher über die Stange 8 oder einen Roboterarm die Düse 1 gegen das Substrat 3 führen und durch Absenken oder Anheben des Roboterarms die Eintrittsöffnung 133 öffnen oder schliessen. Die Antriebsvorrichtung 9 benötigt daher keine weiteren Steuermittel als diejenigen, die ohnehin zur Führung einer Düse bereits vorgesehen sind. Die Antriebsvorrichtung 9 kann mit dem Düsenkörper 15 beispielsweise mittels des in Figur 8b schematisch gezeigten Verbindungselements 91 auch fest verbunden werden, so dass die Stange 8 lediglich der Betätigung des Abschlusselements 150 und nicht dem Halten der Düse 1 dient.

Die Erfindung wurde exemplarisch anhand der in den Figuren 4 bis 8 gezeigten Ausführungsbeispiele erläutert. Ausgehend von der erfindungsgemässen Lösung sind jedoch zahlreiche weitere Ausgestaltungen der Vorrichtung realisierbar. Insbesondere sind verschiedenartige Ausgestaltungen des Düsenkörpers 15 und des Abschlusselements 150 sowie der darin vorgesehen Öffnungen realisierbar. Ferner sind nebst Robotervorrichtungen verschiedene andere Antriebs- und Steuervorrichtungen verwendbar.

### Literaturverzeichnis

- [1]: US 4'933'032
- [2]: US 6'607'622

### Bezugszeichenliste

- 100: erfindungsgemässe Vorrichtung
- 100': bekannte Vorrichtung
- 100A: verbesserte Vorrichtung
- 1: Düse der erfindungsgemässen Vorrichtung
- 1': bekannte Düse
- 1 A: verbesserte Düse
- 11: Verbindungselement an der Düse
- 12: Kanal innerhalb der Düse
- 13: Düsenöffnung
- 131: Austrittsöffnung
- 1310: erste Öffnung im Abschlusselement
- 132: Extrusionsöffnung
- 1320: zweite Öffnung im Abschlusselement
- 133: Eintrittsöffnung
- 1330: dritte Öffnung im Abschlusselement
- 135: Nocken, Bolzen. Anschlagleisten
- 1350: Führungsschlitz
- 139: Zufuhröffnung
- 15: Düsenkörper
- 150: Abschlusselement
- 1500: Schnitt
- 151: erste Seitenwand des Düsenkörpers
- 152: zweite Seitenwand des Düsenkörpers
- 153: dritte Seitenwand des Düsenkörpers
- 154: vierte Seitenwand des Düsenkörpers
- 155: Kontaktfläche des Düsenkörpers
- 156: Lagerelement
- 2: Material
- 22: Materialstrang
- 221: Anfangsstück des Materialstrangs
- 222: Endstück des Materialstrangs
- 23: Verbindungsstück einer aus einem Materialstrang geformten Schlaufe
- 3: Substrat, beispielsweise Glassubstrat
- 6: elastisches Element
- 8: Antriebsstange
- 9: Antriebs- und Steuervorrichtung
- 91: Verbindungselement
- x: Längsachse

## Patentansprüche

1. Vorrichtung (100) zur Abgabe von viskosem oder pastösem Material (2) in Form eines Materialstrangs (22), mit einer Düse (1), die an einem Düsenkörper (15) frontseitig eine Austrittsöffnung (131) aufweist, **dadurch gekennzeichnet, dass** auf einer Seite des Düsenkörpers (15) eine Extrusionsöffnung (132), durch die der Materialstrang (22) mit einem gewünschten Querschnitt aus der Düse (1) austreten kann, und auf der gegenüber liegenden Seite des Düsenkörpers (15) eine Eintrittsöffnung (133), in die bereits abgegebenes Material (2) eintreten kann, vorgesehen sind, welche an die Austrittsöffnung (131) anschliessen, die durch wenigstens eine auf ein Substrat (3) abstützbare Kontaktfläche (155) vorzugsweise auf zwei Seiten begrenzt ist.

2. Vorrichtung (100) nach Anspruch 1, **dadurch gekennzeichnet, dass** die Extrusionsöffnung (132) und die Eintrittsöffnung (133) zumindest annähernd gleich ausgestaltet oder mit gleichen Proportionen versehen sind und vorzugsweise einen dreieckigen oder trapezoiden Querschnitt aufweisen.

3. Vorrichtung (100) nach Anspruch 1 oder 2, **dadurch gekennzeichnet, dass** der mit einem der Durchführung des Materials (2) dienenden Kanal (12) versehene Körper (15) der Düse (1) zylindrisch oder kegelförmig ausgestaltet ist und gegebenenfalls mehrere durch Kanten voneinander getrennte ebene Seiten aufweist.

4. Vorrichtung (100) nach Anspruch 1, 2 oder 3, **dadurch gekennzeichnet, dass** die Düse (1) mittels einer programmgesteuerten Antriebsvorrichtung (9) maschinell führbar ist, um einen Materialstrang (22) gegebenenfalls in Form einer in sich geschlossenen Schlaufe auf ein Substrat (3) aufzutragen.

5. Vorrichtung (100) nach Anspruch 1, 2, 3 oder 4, **dadurch gekennzeichnet, dass** die Eintrittsöffnung (133) mittels eines verschiebbar gelagerten Abschlusselements (150) ganz oder teilweise abschliessbar ist und/oder dass die Eintrittsöffnung (133) mittels eines drehbar gelagerten Abschlusselements (150) ganz oder teilweise abschliessbar ist, welche Öffnungen (1320, 1330, 1340) aufweist, die wahlweise über die Extrusionsöffnung (132) und die Eintrittsöffnung (133) oder nur über die Extrusionsöffnung (132) drehbar sind.

6. Vorrichtung (100) nach Anspruch 5, **dadurch gekennzeichnet, dass** der Körper (15) der Düse (1) und das Abschlusselement (150) mittels wenigstens eines Lagerelements (155) oder durch entsprechende Formgebung des Körpers (15) der Düse (1) und des Abschlusselements (150) gegenseitig derart gelagert sind, dass der Körper (15) der Düse (1) durch das Abschlusselement (150) oder das Abschlusselement (150) durch den Körper (15) der Düse (1) drehbar oder verschiebbar gehalten ist.

7. Vorrichtung (100) nach Anspruch 6, **dadurch gekennzeichnet, dass** der Körper (15) der Düse (1) und das Abschlusselement (150) mittels eines elastischen Elements (6), gegebenenfalls mittels einer Spiralfeder, derart miteinander verbunden sind, dass das Abschlusselement (150) mittels Krafteinwirkung relativ zur Eintrittsöffnung (133) verschiebbar ist, wodurch die Eintrittsöffnung (133) teilweise oder vollständig geöffnet oder verschlossen werden kann.

8. Vorrichtung (100) nach Anspruch 5, **dadurch gekennzeichnet, dass** das Abschlusselement (150) mittels der Antriebsvorrichtung (9) derart steuerbar ist, dass die die Eintrittsöffnung (133) wahlweise schliessbar und insbesondere für das Überfahren eines Endes (221) des bereits applizierten Materialstrangs (22) wieder öffenbar ist.

9. Vorrichtung (100) nach Anspruch 6, 7 oder 8, **dadurch gekennzeichnet, dass** der Körpers (15) der Düse (1) von der Antriebsvorrichtung (9) gehalten und geführt ist.

10. Vorrichtung (100) nach Anspruch 7 oder 8, **dadurch gekennzeichnet, dass** das der Lagerung und Halterung des Körpers (15) der Düse (1) dienende Abschlusselement (150) von der Antriebsvorrichtung (9) gehalten ist und entgegen der Kraft des elastischen Elements (6) gegen den auf das Substrat (3) abgestützten Körper (15) der Düse (1) verschiebbar ist, um die Eintrittsöffnung (133) wahlweise zu öffnen oder zu schliessen.

11. Verwendung der Vorrichtung (100) nach einem der Ansprüche 1-10, zum Aufbringen eines Materialstrangs (22) in Form einer Schlaufe auf ein Substrat (3), vorzugsweise eine Autoscheibe.
